# EUROPÄISCHE PATENTSCHRIFT

(11) **EP 0 860 937 B1**
(45) Veröffentlichungstag und Bekanntmachung des Hinweises auf die Patenterteilung: **05.10.2005**
(21) Anmeldenummer: 98102146.2
(22) Anmeldetag: 07.02.1998
(51) Int. Cl.: H02P 7/00, G05D 3/12

(54) **Stellantriebsansteuerung**
Driving circuit for an actuator
Circuit de commande pour un actionneur

(30) Priorität: 22.02.1997 DE 19707171
(43) Veröffentlichungstag der Anmeldung: 26.08.1998
(73) Patentinhaber: Valeo Klimasysteme GmbH, 96476 Rodach (DE)
(72) Erfinder: Förtsch, Gunnar, 96476 Rodach (DE)
(74) Vertreter: COHAUSZ DAWIDOWICZ HANNIG & SOZIEN

(56) Entgegenhaltungen:
- EP-A- 0 082 362
- DE-A- 3 827 882
- QUADRADO J C ET AL: "ELASTIC FUZZY CONTROLLER AND SLIDING MODE POWER INVERTER FOR ELECTROMECHANICAL POSITIONERS" EPE '95: 6TH. EUROPEAN CONFERENCE ON POWER ELECTRONICS AND APPLICATIONS, SEVILLA, SEPT. 19 - 21, 1995, Bd. & 1, Nr. CONF. 6, 19. September 1995, Seiten 1.470-1.475, XP000537568 EUROPEAN POWER ELECTRONICS AND DRIVES ASSOCIATION
- BROWN S: "SMART H-BRIDGE DRIVER FOR STEPPER AND DC BRUSHED MOTORS" ELECTRONIC ENGINEERING, Bd. 66, Nr. 814, 1. Oktober 1994, Seite 51/52, 54 XP000471390

## Beschreibung

Die Erfindung betrifft ein Verfahren zur Steuerung eines Stellantriebes dessen Antriebswelle von einem Elektromotor angetrieben ist, wobei der Steuerung ein Stell-Sollwert von einem Sollwertgeber vorgebbar ist und ein Stell-Istwert von einem Istwertaufnehmer aufnehmbar ist (siehe DE 3 827 882).

Es ist bekannt, für die Steuerung von Stellantrieben eine "Nachlaufsteuerung" zu verwenden. Bei einer derartigen Steuerung ist der gesamte Stellwinkel (z.B. von 0° bis 360°) in eine diskrete Zahl von Schritten aufgeteilt. Ein Elektromotor dreht den Antrieb vom momentanen Stell-Istwert zum gewünschten Stell-Sollwert. Die Rückmeldung des Stell-Istwertes erfolgt über ein Stellpotentiometer. Wenn bei der Steuerung der Istwert kleiner als der Sollwert ist, dreht der Antrieb hin zu größeren Winkeln und vice versa, bis der jeweilige Grenzwinkel von 0° bzw. 360° erreicht ist. Die Steuerung kann nicht über die Grenzwinkel, die mitunter auch von zusätzlichen Anschlägen definiert werden, hinausdrehen.

Bei dieser Art der Steuerung ist besonders nachteilig, daß die Bewegung immer über den großen Stellwinkel erfolgen muß auch wenn der Verstellweg über den anderen Stellwinkel wesentlich kürzer gewesen wäre. So überfährt der Antrieb im o.g. Beispiel einen Winkel von 340°, wenn eine Verstellung von 10° zu 350° oder umgekehrt gewünscht wird.

Es ist besonders nachteilig, daß für den größeren Stellweg eine entsprechend längere Zeit zur Einstellung benötigt wird. Wird eine derartige Steuerung zur Einstellung des Stellwertes einer Regelung eingesetzt, so bewirkt die lange Einstellzeit ein langsames Einschwingen der Regelgröße, was sich nachteilig auf das Regelverhalten auswirkt. Es ist außerdem nachteilig, daß beim Überstreichen des größeren Winkelbereiches unvermeidbar Stellwerte eingestellt werden, die unerwünscht sind.

Aufgabe der Erfindung ist es daher, ein Verfahren zu schaffen, das bei der Möglichkeit einer unbegrenzten Drehung einer Antriebswelle durch einen Elektromotor eine schnelle und präzise Einstellung des Stell-Sollwertes auf dem kürzesten Verstellweg ermöglicht.

Die Aufgabe wird erfindungsgemäß durch ein Verfahren nach dem Kennzeichen des Anspruch 1 gelöst.

Vorteilhafte Ausführungsformen des erfindungsgemäßen Verfahrens sind in den Unteransprüchen genannt.

Vorteilhaft an dem erfindungsgemäßen Verfahren ist, daß die Steuerung keinen (elektrischen) Nullpunkt mehr aufweist, der eine unüberwindbare Grenze darstellt. Somit ist eine endlose Drehung des Antriebes in beiden Richtung möglich. Die Steuerung erkennt den kürzeren der beiden Stellwege vom Stell-Istwert zum Stell-Sollwert und veranlaßt den Motor den entsprechende Drehsinn einzunehmen.

Durch den kürzeren Stellweg wird ein schnelles Anfahren des Stell-Sollwertes auf dem direkten Weg ermöglicht. Die erfindungsgemäße Steuerung läßt sich damit vorteilhaft für Regelungen einsetzen, da durch die kurze Einstellzeit eine Reduzierung der Einschwingzeit und dadurch ein besseres Regelverhalten erreicht wird. Mit dem Verfahren werden vorteilhafterweise herkömmliche Elektromotoren, insbesondere Gleichstrommotoren betrieben. Die Steuerung läßt sich jedoch auch für Schrittmotoren einsetzen.

Besonders vorteilhaft läßt sich das erfindungsgemäße Verfahren zur Steuerung der Einstellung von Luftleitklappen in Luftverteilereinrichtungen von Heiz- bzw. Klimaanlagen von Kraftfahrzeugen einsetzen. Durch das direkte Einstellen des Stell-Sollwertes wird ein Überfahren von unerwünschten Einstellungen vermieden, was für die Fahrzeuginsassen eine Erhöhung des Bedien- und Fahrkomforts bedeutet. Mit der Steuerung ist eine exakte Kontrolle der Drehbewegung von vollständig rotierbaren Luftleitklappen möglich. Auf begrenzende Anschläge für die Luftleitklappen kann völlig verzichtet werden. Das endlose Verstellen der Klappen ohne Begrenzung erlaubt darüber hinaus wegen des großen Winkelbereiches des Vollkreises von 360° eine größere Anzahl von optionalen Einstellungen.

Es ist zudem vorteilhaft, das Verfahren zur Einstellung von Luftleitklappen einzusetzen, die über Kulissenscheiben verschwenkbar sind. Durch eine Steuerung nach dem Verfahren lassen sich die Kulissenscheiben, die eine Drehbewegung in eine Schwenkbewegung umsetzen, in beiden Drehrichtungen um beliebige Winkelbereiche verstellen. Damit sind die Klappen ebenfalls in beiden Richtungen innerhalb eines vorgegebenen Winkelbereiches beliebig und schnell verschwenkbar.

Vorteilhaft ist weiterhin, daß bestehende Steuerungen einfach und preiswert um das erfindungsgemäße Verfahren erweitert werden können, da meist ein Istwertaufnehmer in den Steuerungen schon vorhanden ist. Das erfindungsgemäße Verfahren trägt außerdem zur Reduzierung der Betriebskosten des Fahrzeuges bei.

In einer vorteilhaften Ausführung weist die Recheneinheit einen Analogsubtrahierer auf, der um zwei Komparatoren mit binären Ausgängen und um zwei Paare logischer UND-Gatter erweitert ist. Dabei ist jeweils ein Paar von UND-Gattern einer Drehrichtung zugeordnet. Eine Digitalisierung der Ausgangsgrößen des Istwertfühlers durch einen Analog/Digital Wandler (ADC) ist nicht nötig. Es ist besonders günstig, für die Stellwerte eine Einheit zu verwenden, die in ein Winkelmaß umgerechnet werden kann. Die Stellwerte können beispielsweise im Winkelbereich zwischen 0° und 360° liegen. Dabei liefert ein Einstellpotentiometer eine stetig einstellbare analoge Spannung.

In einer anderen Ausführungsform arbeitet die Recheneinheit mit einem Digitalsubtrahierer. Für die Realisierung der Steuerung mit einem Digital- oder Analogsubtrahierer läßt sich ein separater Baustein mit integrierter Schaltung ("ASIC" = Application Specified Integrated Circuit) herstellen, der die digitalisierten Größen anwendungsspezifisch verarbeitet. Der Einsatz eines solchen ASIC trägt zur Reduzierung des finanziellen Aufwandes für die Recheneinheit bei.

Während für die Festlegung und Umsetzung der Drehrichtung das erfindungsgemäße Verfahren dient, ist es vorteilhaft, für die Einstellung des Stellweges eine bekannte Nachlaufsteuerung einzusetzen, die beim Rotieren des Antriebes den momentanen Stell-Istwert mit dem gewünschten Stell-Sollwert vergleicht und den Antrieb beim Erreichen der Sollposition stoppt.

Ein Ausführungsbeispiel des erfindungsgemäßen Verfahrens wird im folgenden anhand der Zeichnungen näher beschrieben.

Es zeigen:
- **Fig. 1**: eine Recheneinheit mit Analogsubtrahierer,
- **Fig. 2**: eine Anwendung bei einer Luftverteilereinrichtung eines Kraftfahrzeuges,
- **Fig. 3**: einen Digitalsubtrahierer.

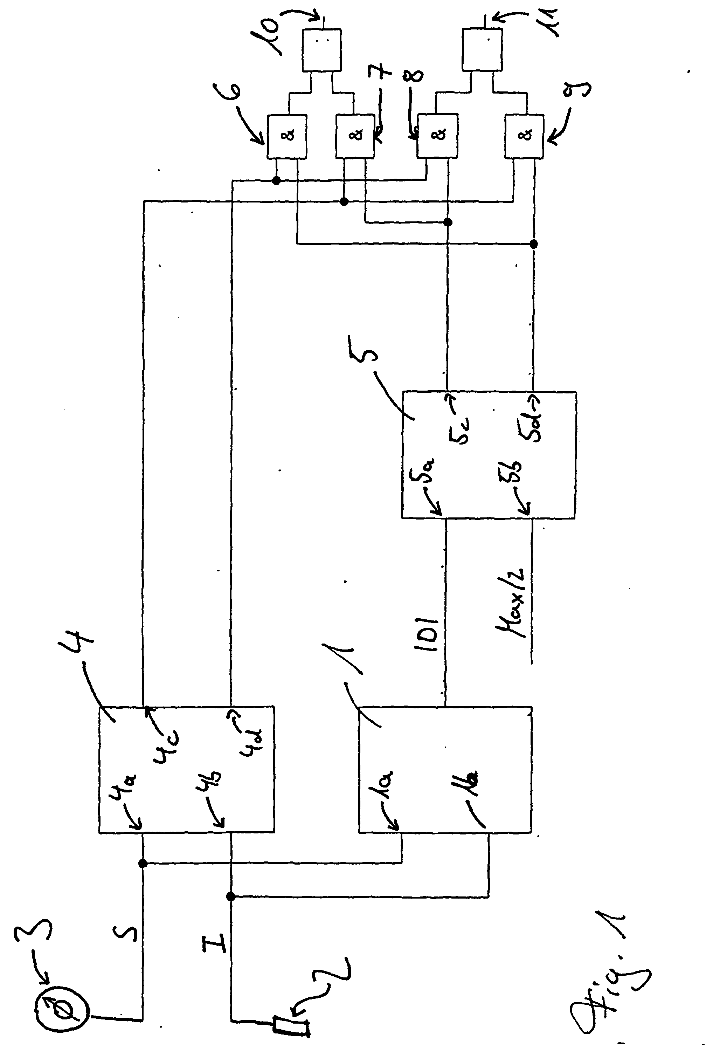

Figur 1 zeigt das Schaltschema für eine Recheneinheit, die mit einem Analogsubtrahierer 1 ausgestattet ist. Dabei wird einem der beiden Eingänge 1b des Analogsubtrahierers 1 der von einem Istwertaufnehmer 2 aufgenommene analoge Stell-Istwert I zugeführt, während an den anderen Eingang 1a der analoge durch einen analogen Sollwertgeber z.B. über ein Potentiometer 3 festgelegte Stell-Sollwert S angelegt wird. Beide Werte S und I, die in diesem Ausführungsbeispiel im Winkelmaß Grad angegeben sind, werden gleichsam an die beiden Eingänge 4a und 4b eines Komparators 4 angelegt. Der Elektromotor und das endlos drehbare Getriebe sind nicht dargestellt.

Der Komparator 4 vergleicht die Werte I und S und setzt je nach Ergebnis des Vergleiches einen seiner Ausgänge 4c bzw. 4d auf einen Spannungswert, der dem logischen Level "high" und damit der logischen eins entspricht. Beispielsweise wird der Ausgang 4c auf "high" gesetzt, wenn der Stell-Sollwert S größer als der Stell-Istwert I ist.

Der Analogsubtrahierer 1 bildet die Differenz der Werte I und S und gibt den Betrag der Differenz an seinem Ausgang 1c als analoge Größe |D| aus. Die Spannung |D| wird einem Eingang 5a eines zweiten Komparators 5 zugeführt. An den anderen Eingang 5b des Komparators 5 wird eine konstante Spannung der Größe Max/2 entsprechend der Hälfte des Maximalwertes, also beispielsweise entsprechend der Einstellung 180°, angelegt. Der Komparator 5 vergleicht wiederum die beiden Werte und setzt je nach Ergebnis des Vergleiches einen der beiden Ausgänge 5c bzw. 5d auf den Spannungswert "high", während der andere Ausgang auf "low" verbleibt.

Ein Ausgang des einen Komparators 4 oder 5 wird mit einem Ausgang des anderen Komparators 5 bzw. 4 in einen Baustein geführt, der eine logische UND-Verknüpfung durchführt (UND-Gatter). Es ist jedem Ausgang eines Komparators eines der UND-Gatter 6, 7, 8 oder 9 zugeordnet. Die Verschaltung erfolgt derart, daß jeder Ausgang eines Komparators mit den beiden Ausgängen des anderen Komparators verknüpft ist und daß einem Komparator 4 (5) ein Paar von zwei UND-Gattern 6, 7 (8,9) zugeordnet sind. Jedem der Paare 6, 7 bzw. 8, 9 ist jeweils eine Drehrichtung des Motors zugeordnet. Schaltet eines der UND-Gatter durch, weil an den beiden Eingängen jeweils ein "high" anliegt, so wird der Motor veranlaßt, im Uhrzeigersinn (positive Drehrichtung) oder entgegen dem Uhrzeigersinn (negative Drehrichtung) zu drehen. Wie dargestellt veranlaßt ein Signal auf der Ausgangsleitung 10 den Elektromotor in positiver und ein Signal auf der Ausgangsleitung 11 in negativer Richtung zu drehen.

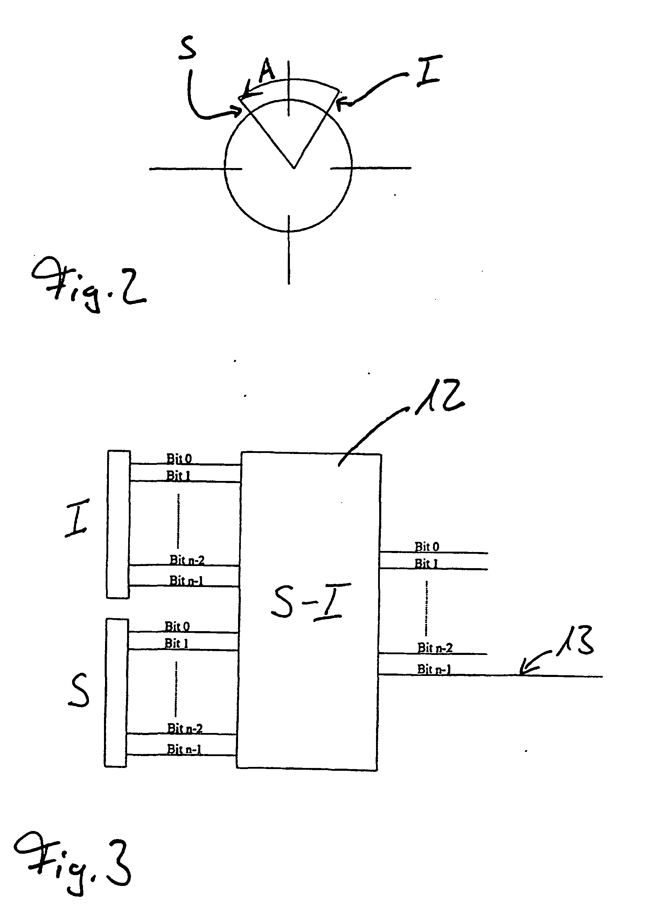

In Figur 2 ist ein Zahlenbeispiel für die Luftverteilung einer Klimaanlage gezeigt. Der Stell-Istwert I entspricht einer Einstellung von etwa 30° auf dem Vollkreis. Es wird ein Stell-Sollwert S von etwa 330° vorgegeben. Bezogen auf das Schema in Figur 1 liegen die Werte S und I am Komparator 4 und am Subtrahierer 1 an. Da S größer als I ist legt der Komparator nach dem Vergleich den Ausgang 4c auf "high". Am Ausgang des Subtrahierers 1 liegt |D| = |S-I| also eine Spannung entsprechend 300° an. Dieser Wert wird dem Komparator 5 zugeführt und mit Max/2 also 360°/2=180° verglichen. Da |D| > 180° legt der Komparator 5 die Leitung 5c auf "high". Die beiden Werte "high" kommen im UND-Gatter 7 zusammen. Die Eingänge der anderen UND-Gatter 6, 8 und 9 sind mit mindestens einem Wert "low" belegt. Nur das UND-Gatter 7 schaltet somit durch und bedingt in diesem Falle einen Lauf des Antriebs über den kleinen Winkelbereich entgegen dem Uhrzeigersinn (Pfeil A). Die 60° Drehwinkel werden in diesem Beispiel von einer Nachlaufsteuerung eingestellt.

In Figur 3 ist der Digitalsubtrahierer 12 einer Recheneinheit dargestellt. Der Stell-Istwert I und der Stell-Solwert S werden dem Digitalsubtrahierer 12 als digitale Größen von n-bit zugeführt. Der Subtrahierer 12 bildet die vorzeichenlose Differenz S-I. Das höchstwertige Bit (Drehrichtungsbit) der Differenz, das am Ausgang 13 n-1 anliegt, bestimmt den Drehsinn des Elektromotors. Dabei findet bei gesetztem Drehrichtungsbit eine Bewegung zu höheren Stellwerten statt. Die Auflösung des Digitalwandlers und -subtrahierers ist so bemessen, daß der volle Drehwinkel mit n-bit beschrieben wird.

## Patentansprüche

1. Verfahren zur Steuerung eines Stellantriebes dessen Antriebswelle von einem Elektromotor angetrieben ist, wobei der Steuerung ein Stell-Sollwert (S) von einem Sollwertgeber (3) vorgebbar ist und ein Stell-Istwert (I) von einem Istwertaufnehmer (2) aufnehmbar ist,
**dadurch gekennzeichnet,**
- **daß** die Antriebswelle endlos in beiden Drehrichtungen drehbar ist,
- **daß** nach der Vorgabe eines Stell-Sollwertes (S) die Größen des anliegenden Stell-Istwertes (I) und des vorgegebenen Stell-Sollwertes (S) einer Recheneinheit zugeführt werden und
- **daß** zum Erreichen des kürzesten Drehweges die Recheneinheit dem Elektromotor eine Drehrichtung vorgibt, deren Vorzeichen vom Vergleich der beiden Größen (S,I) abhängt.

2. Verfahren nach Anspruch 1,
**dadurch gekennzeichnet, daß** der Elektromotor den Stellantrieb um einen Drehwinkel dreht, dessen Wert dem kleineren Winkel zwischen dem Stell-Sollwert (S) und dem Stell-Istwert (I) entspricht.

3. Verfahren nach Anspruch 1 oder 2,
**dadurch gekennzeichnet, daß** der Drehwinkel des Stellantriebes von einer Nachlaufsteuerung eingestellt wird.

4. Verfahren nach einem der vorigen Ansprüche,
**dadurch gekennzeichnet, daß** der Elektromotor ein Gleichstrommotor ist.

5. Verfahren nach einem der vorigen Ansprüche,
**dadurch gekennzeichnet, daß** die Recheneinheit einen Analogsubtrahierer (1), zwei Komparatoren (4,5) mit binären Ausgängen und zwei Paare logischer UND-Gatter (6,7,8,9) aufweist, wobei jeweils ein Paar (6,7) (8,9) einer Drehrichtung zugeordnet ist.

6. Verfahren nach Anspruch 5,
**dadurch gekennzeichnet,**
- **daß** ein erster Komparator (4) einen Vergleich von Stell-Sollwert (S) und Stell-Istwert (I) durchführt und entsprechend dem Ergebnis genau einen seiner beiden Ausgänge (4a) mit dem zum anderen Ausgang (4b) komplementären logischen Zustand, insbesondere mit einer binären 1 ("high") im Gegensatz zu 0 ("low"), belegt,
- **daß** der Analogsubtrahierer (1) den Betrag der Differenz von Stell-Sollwert (S) und Stell-Istwert (I) bildet,
- **daß** ein zweiter Komparator (5) einen Vergleich des vom Analogsubtrahierer (1) ermittelten Betrages der Differenz und einem Wert bildet, welcher der Hälfte des Drehwinkels entspricht,
- **daß** der zweite Komparator (5) nach dem Vergleich genau einen seiner beiden Ausgänge (5c) mit dem zum anderen Ausgang (5d) komplementären logischen Zustand belegt,
- **daß** jedem UND-Gatter (6,7,8,9) je ein Zustand aus jedem der beiden Komparatoren (4,5) zugeführt wird und
- **daß** der Drehsinn des Elektromotors durch das eine durchschaltende UND-Gatter bestimmt wird, wobei jedes der beiden Paare von UND-Gattern einer Drehrichtung entspricht.

7. Verfahren nach einem der vorigen Ansprüche,
**dadurch gekennzeichnet, daß** die Recheneinheit einen Digitalsubtrahierer (12) auweist, dem der Stell-Sollwert (S) und der Stell-Istwert (I) als digitale Größen von jeweils n Bit zugeführt werden und der eine vorzeichenlose Subtraktion beider Größen durchführt.

8. Verfahren nach Anspruch 7,
**dadurch gekennzeichnet, daß**
das höchstwertige Bit (Drehrichtungsbit) der Ausgangsgröße des Digitalsubtrahierers (12) den Drehsinn des Elektromotors bestimmt.

9. Verwendung des Verfahrens nach den Ansprüchen 1 bis 8 zur Steuerung einer Luftverteilereinrichtung in einem Kraftfahrzeug.

10. Verwendung des Verfahrens nach den Ansprüchen 1 bis 8 zur Steuerung einer Luftverteilereinrichtung in einem Kraftfahrzeug, wobei die Luftverteilereinrichtung mindestens eine Luftleiteinrichtung aufweist, die ohne Anschlag im Vollkreis verschwenkbar ist.

11. Verwendung des Verfahrens nach den Ansprüchen 1 bis 8 zur Steuerung einer Luftverteilereinrichtung in einem Kraftfahrzeug, wobei die Luftverteilereinrichtung mindestens eine Luftleiteinrichtung aufweist, die von einer Kulissenscheibe verschwenkbar ist.

## Claims

1. A method for controlling an actuator, the driving shaft of which is driven by an electric motor, wherein a adjustment set point (S) may be set in advance for the control by a set-point transmitter (3) and an adjustment actual value (I) may be sensed by an actual value sensor (2),
**characterized in that**
- the driving shaft is continuously rotatable in both directions of rotation,
- after setting in advance an adjustment set value (S), the quantities of the pending adjustment actual value (I) and of the preset adjustment set point (S) are introduced into a computer unit and
- to attain the shortest rotary travel, the computer unit sets a direction of rotation for the electric motor, the sign of which depends on the comparison of both quantities (S, I).

2. The method according to claim 1, **characterized in that** the electric motor rotates the actuator by an angle of rotation, the value of which corresponds to the smallest angle between the adjustment set value (S) and the adjustment actual value (I).

3. The method according to claim 1 or 2, **characterized in that** the angle of rotation of the actuator is adjusted by a follow-up control.

4. The method according to any of the above claims, **characterized in that** the electric motor is a DC current motor.

5. The method according to any of the above claims, **characterized in that** the computer unit comprises an analog subtractor (1), two comparators (4, 5) with binary outputs and two pairs of logic AND gates (6, 7, 8, 9), wherein each pair (6, 7) (8,9) is respectively associated with a direction of rotation.

6. The method according to claim 5, **characterized in that**
- a first comparator (4) performs a comparison of the adjustment set value (S) and of the adjustment actual value (I) and in accordance with the result, it sets one of its two outputs (4a) to a logic state complementary to that of the other output (4b), in particular a binary 1 ("high") in contrast to a 0 ("low"),
- the analog subtractor (1) generates the amount of the difference between the adjustment set value (S) and the adjustment actual value (I),
- a second comparator (5) performs a comparison of the amount determined by the analog subtractor (1) of the difference and forms the value which corresponds to half the angle of rotation,
- the second comparator (5) in accordance the comparison sets one of its two outputs (5c) to a logic state complementary to the other output (5d),
- each state from each of the two comparators (4, 5) is introduced into each AND gate (6, 7, 8, 9) and
- the direction of rotation of the electric motor is determined by a switching AND gate, wherein each one of both pairs of AND gates corresponds to a direction of rotation.

7. The method according to any of the above claims, **characterized in that** the computer unit comprises a digital subtractor (12), into which the adjustment set value (S) and the adjustment actual value (I) are introduced as digital quantities of respectively n bits and which performs said one unsigned subtraction of both magnitudes.

8. The method according to claim 7, **characterized in that** the most significant bit (bit of the direction of rotation) of the output quantity of the digital subtractor (12) determines the direction of rotation of the electric motor.

9. The use of the method according to claims 1 to 8 for controlling an air distributing device in a motor vehicle.

10. The use of the method according to claims 1 to 8 for controlling an air distributing device in a motor vehicle, wherein the air distributing device comprises at least one air conducting device which may pivot over a full circle without any stop.

11. The use of the method according to claims 1 to 8 for controlling an air distributing device in a motor vehicle, wherein the air distributing device comprises at least one air conducting device which may pivot from a sliding disk.

## Revendications

1. Procédé pour le circuit de commande d'un actionneur dont l'arbre de transmission est actionné par un moteur électrique, sachant qu'une valeur nominale de réglage (S) peut être affectée à la commande par un dispositif d'affectation de valeur nominale (3) et qu'une valeur effective de réglage (I) peut être acceptée par un dispositif d'acceptation de valeur nominale (2) **caractérisé en ce que**
- l'arbre de transmission peut tourner en continu dans les deux sens de rotation,
- après l'affectation d'une valeur nominale de réglage (S) les grandeurs de la valeur effective de réglage voisine (I) et de la valeur nominale de réglage affectée (S) sont transmises à une unité de calcul et
- pour atteindre la course de rotation la plus courte, l'unité de calcul attribue un sens de rotation au moteur électrique, dont le signe dépend de la comparaison des deux valeurs (S, I).

2. Procédé selon la revendication 1, **caractérisé en ce que** le moteur électrique fait pivoter l'arbre de transmission d'un angle de rotation dont la valeur correspond au plus petit angle entre la valeur nominale de réglage (S) et la valeur effective de réglage (I).

3. Procédé selon la revendication 1 ou 2, **caractérisé en ce que** l'angle de rotation de l'arbre de transmission est déterminé par un asservissement de poursuite.

4. Procédé selon l'une des revendications précédentes, **caractérisé en ce que** le moteur électrique est un moteur à courant continu.

5. Procédé selon l'une des revendications précédentes, **caractérisé en ce que** l'unité de calcul comporte un soustracteur analogique (1), deux comparateurs (4, 5) avec sorties binaires et deux paires de portes ET logiques (6, 7, 8, 9), sachant que chaque paire (6, 7) (8, 9) est attribuée à un sens de rotation.

6. Procédé selon la revendication 5, **caractérisé en ce que**
- un premier comparateur (4) réalise une comparaison de la valeur nominale de réglage (S) et de la valeur effective de réglage (I) et affecte précisément, en fonction du résultat, à l'une de ses deux sorties (4a), l'état logique complémentaire à l'autre sortie (4b), en particulier avec un 1 binaire ("haut") contrairement à 0 ("bas"),
- le soustracteur analogique (1) établit la valeur de la différence entre la valeur nominale de réglage (S) et la valeur effective de réglage (I),
- un deuxième comparateur (5) établit une comparaison entre la valeur de la différence communiquée par le soustracteur analogique (1) et une valeur qui correspond à la moitié de l'angle de rotation,
- le deuxième comparateur (5), après la comparaison, affecte précisément à l'une de ses deux sorties (5c) un état logique complémentaire à l'autre sortie (5d),
- à chaque porte ET (6, 7, 8, 9) est affecté un état en fonction de chacun des deux comparateurs (4, 5) et
- le sens de rotation du moteur électrique est déterminé par une porte ET en connexion, sachant que chacune des deux paires de portes ET correspond à un sens de rotation.

7. Procédé selon l'une des revendications précédentes, **caractérisé en ce que** l'unité de calcul comporte un soustracteur numérique (12) auquel sont transmises la valeur nominale de réglage (S) et la valeur effective de réglage (I) en tant que valeurs numériques de respectivement n bits et qui réalise une différence sans signe des deux valeurs.

8. Procédé selon la revendication 7, **caractérisé en ce que** le bit ayant la plus grande valeur (bit du sens de rotation) de la valeur de sortie du soustracteur numérique (12) détermine le sens de rotation du moteur électrique.

9. Application du procédé selon les revendications 1 à 8 au circuit de commande d'une installation de diffusion d'air dans une automobile.

10. Application du procédé selon les revendications 1 à 8 au circuit de commande d'une installation de diffusion d'air dans une automobile, sachant que l'installation de diffusion d'air comporte au moins une installation d'amenée d'air, qui est orientable sans butée sur une rotation complète.

11. Application du procédé selon les revendications 1 à 8 au circuit de commande d'une installation de diffusion d'air dans une automobile, sachant que l'installation de diffusion d'air comporte au moins une installation d'amenée d'air, qui est orientable au moyen d'un disque à coulisse.
